# EUROPÄISCHE PATENTSCHRIFT

(11) **EP 2 583 289 B1**
(45) Veröffentlichungstag und Bekanntmachung des Hinweises auf die Patenterteilung: **08.04.2015**
(21) Anmeldenummer: 11717954.9
(22) Anmeldetag: 28.04.2011
(51) Int. Cl.: H01F 29/04, H01H 9/00

(54) **LASTSTUFENSCHALTER**
ON-LOAD TAP CHANGER
CHANGEUR DE PRISES EN CHARGE

(30) Priorität: 18.06.2010 DE 102010024255
(43) Veröffentlichungstag der Anmeldung: 24.04.2013
(73) Patentinhaber: Maschinenfabrik Reinhausen GmbH, 93059 Regensburg (DE)
(72) Erfinder: ALBRECHT, Wolfgang, 93173 Wenzenbach (DE); HAMMER, Christian, 93059 Regensburg (DE); SACHSENHAUSER, Andreas, 84066 Mallersdorf-Pfaffenberg (DE)
(86) Internationale Anmeldenummer: PCT/EP2011/002121
(87) Internationale Veröffentlichungsnummer: WO 2011/157316

(56) Entgegenhaltungen:
- DE-A1- 2 125 763
- JP-A- 2003 297 648
- JP-A- 2008 135 651

## Beschreibung

Die Erfindung betrifft einen Laststufenschalter zur unterbrechungslosen Umschaltung zwischen Wicklungsanzapfungen eines Stufentransformators.

Stufenschalter sind seit vielen Jahren zur unterbrechungslosen Umschaltung zwischen verschiedenen Wicklungsanzapfungen von Stufentransformatoren in großen Zahlen weltweit im Einsatz. Solche Stufenschalter bestehen üblicherweise aus einem Wähler zur leistungslosen Anwahl der jeweiligen Wicklungsanzapfung des Stufentransformators, auf die umgeschaltet werden soll, und einem Lastumschalter zur eigentlichen Umschaltung von der bisherigen auf die neue, vorgewählte Wicklungsanzapfung. Der Lastumschalter weist dazu üblicherweise Schaltkontakte und Widerstandskontakte auf. Die Schaltkontakte dienen dabei zur direkten Verbindung der jeweiligen Wicklungsanzapfung mit der Lastableitung, die Widerstandskontakte zur kurzzeitigen Beschaltung, d. h. Überbrückung mittels eines oder mehrerer Überschaltwiderstände. Die Entwicklungen der letzten Jahre führten jedoch weg von Lastumschaltern mit mechanischen Schaltkontakten. Stattdessen werden vermehrt Vakuumschaltröhren oder auch Thyristoren als Schaltelemente eingesetzt.

Die Verwendung von Vakuumschaltröhren zur Lastumschaltung verhindert eine Lichtbogenbildung im Öl und damit die Ölverschmutzung des Lastumschalteröles. Sie gestattet damit verlängerte Wartungsintervalle. Laststufenschalter mit Vakuumschaltröhren sind mit zahlreichen unterschiedlichen Schaltungen mit 2, 3, 4 oder auch mehr schaltenden Vakuumschaltröhren pro Phase bekannt. Eine typische Schaltung, hier mit 3 Vakuumschaltröhren pro Phase, zeigt die DE 10 2007 004 530 A1.

Bei verschiedenen Anwendungsfällen solcher bekannter Laststufenschalter mit Vakuumschaltröhren zur Regelung von Leistungstransformatoren ist jedoch eine hohe Stoßspannungsfestigkeit, bis zu 100 kV und deutlich darüber hinaus, erforderlich. Solche unerwünschten Stoßspannungen, deren Höhe wesentlich durch den Aufbau des Stufentransformators und der Wicklungsteile zwischen den einzelnen Anzapfstufen bedingt ist, sind zum einen Blitzstoßspannungen, die sich durch das Einschlagen von Blitzen im Netz ergeben. Zum anderen können auch Schaltstoßspannungen auftreten, die durch nicht vorhersehbare Schaltstöße im zu regelnden Netz verursacht sind.

Bei nicht ausreichender Stoßspannungsfestigkeit des Laststufenschalters kann es zu einem kurzzeitigem Stufenkurzschluss bzw. unerwünschtem Durchschlag an der Keramik bzw. dem Dampfschirm von Vakuumschaltröhren im nicht den Laststrom führenden Lastzweig kommen, was nicht nur deren Langzeitschädigung verursachen kann, sondern generell unerwünscht ist.

Dies führt in vielen Fällen bei der Auslegung der Schaltstrecken und damit insbesondere auch der Vakuumschaltröhren zur Überdimensionierung, damit diese mit Sicherheit der beschriebenen Spannungsbeanspruchung standhalten. Sowohl der heute bei modernen Geräten zur Verfügung stehende geringe Bauraum, als auch die Wirtschaftlichkeit sowie Verfügbarkeit solcher Vakuumschaltröhren lassen eine solche Überdimensionierung nachteilig erscheinen.

Aus der DE 2357209 A und der DE 2604344 ist es bereits bekannt, zur Bekämpfung zu hoher Stoßspannungsbeanspruchungen zwischen den Lastzweigen Schutzfunkenstrecken oder spannungsabhängige Widerstände oder beides vorzusehen; diese Mittel sind jedoch in verschiedenen Fällen unzureichend und können schädliche Stoßspannungsbeanspruchungen in ihrer Wirkung nicht oder nicht vollständig ausschließen.

Neben dem nur unzureichenden Schutz gegenüber hohen Stoßspannungen von bis zu 100 KV, ist die bereits weiter oben erwähnte Schaltung der DE 10 2007 004 530 A1 auch als sogenannte unsymmetrische Schaltung konzipiert, was bedeutet, dass unabhängig von der Schaltrichtung immer der gleiche Kontakt als erster elektrisch geschaltet bzw. mechanisch bewegt werden muss. Bei mechanisch symmetrischen Schaltungen werden hingegen die Kontakte, die bei der Hinbewegung, d. h. der Drehung der Schaltwelle in der einen Richtung, zuletzt geschlossen haben, bei der Rückbewegung, d. h. der Drehung der Schaltwelle in der anderen Richtung, als erste geöffnet und umgekehrt. Unsymmetrische Schaltungen sind im Allgemeinen leichter in der elektrischen Handhabung, weisen allerdings den Nachteil auf, dass deren mechanische Umsetzung sehr aufwändige konstruktive Lösungen erfordern.

So wird zur mechanischen Umsetzung einer unsymmetrischen Schaltung beispielsweise in der WO96/30922 vorgeschlagen, für jedes zu betätigende Schaltelement, sei es eine Vakuumröhre oder ein mechanischer Kontakt, für jede Bewegungsrichtung der Antriebswelle jeweils unterschiedliche Teilkurvenscheiben untereinander auf einem axial verschiebbar auf der Schaltwelle angeordneten Schaltereinsatz vorzusehen, so dass drehrichtungsabhängig die jeweils mit den Schaltelementen korrespondierenden Teilkurvenscheiben mit den selbigen in und außer Eingriff gebracht werden kann.

Aufgabe der Erfindung ist es daher, einen Laststufenschalter zur unterbrechungslosen Umschaltung zwischen Wicklungsanzapfungen eines Stufentransformators anzugeben, der ohne Überdimensionierung der Vakuumschaltröhren dennoch die notwendige Spannungsfestigkeit sicherzustellt und zudem als mechanisch symmetrische Schaltung ausgeführt ist.

Diese Aufgabe wird durch einen Laststufenschalter zur unterbrechungslosen Umschaltung zwischen Wicklungsanzapfungen eines Stufentransformators mit den Merkmalen der beiden nebengeordneten Patentansprüche 1 oder 2 gelöst. Beiden Hauptansprüchen liegt dabei die selbe erfinderische Idee zur Lösung der Aufgabe zu Grunde, technisch realisiert durch in ihrer Wirkung äquivalente Schaltmittel, nämlich mittels Vakuumschaltröhren oder alternativ Halbleiterbauelementen.

Die allgemeine erfinderische Idee besteht dabei darin, eine erste Wicklungsanzapfung eines ersten Hauptstromzweiges über eine Reihenschaltung, bestehend aus einem ersten mechanischen Umschalter und einem ersten Schaltmittel, d. h. einer Vakuumschaltröhre oder alternativ einem Halbleiterbauelement, mit einer Lastableitung zu verbinden, in analog symmetrischer Bauweise dazu eine zweite Wicklungsanzapfung eines zweiten Hauptstromzweiges über eine Reihenschaltung, bestehend aus einem zweiten mechanischen Umschalter und einem zweiten Schaltmittel, d. h. einer zweiten Vakuumschaltröhre oder alternativ einem zweiten Halbleiterbauelement, ebenfalls mit der Lastableitung zu verbinden, zwischen der ersten Wicklungsanzapfung und dem ersten mechanischen Umschalter einen ersten Hilfsstromzweig mit einem eingeschleiften Widerstand abzuzweigen, mittels dem eine elektrische Verbindung mit dem zweiten mechanischen Umschalter des zweiten Hauptstromzweiges herstellbar ist und zwischen der zweiten Wicklungsanzapfung und dem zweiten mechanischen Umschalter einen zweiten Hilfsstromzweig mit einem weiteren eingeschleiften Widerstand abzuzweigen, mittels dem eine elektrische Verbindung mit dem ersten mechanischen Umschalter des ersten Hauptstromzweiges herstellbar ist.

Erfindungsgemäß wird damit eine Schaltung für einen Laststufenschalter zur unterbrechungslosen Umschaltung zwischen Wicklungsanzapfungen eines Stufentransformators angegeben, die nicht nur mechanisch, sondern auch elektrisch symmetrisch ist und zudem über die mechanischen Umschalter eine vollständig galvanische Trennung der jeweils nicht beschalteten Wicklungsanzapfung, und damit eine hohe Stoßspannungsfestigkeit, sicherstellt. Wie bereits erwähnt, werden bei mechanisch symmetrischen Schaltungen die Kontakte, die bei der Hinbewegung, d. h. der Drehung der Schaltwelle in der einen Richtung, zuletzt geschlossen haben, bei der Rückbewegung, d. h. der Drehung der Schaltwelle in der anderen Richtung, als erste geöffnet und umgekehrt. Dies bietet bei deren mechanischen Umsetzung eine besonders einfache Möglichkeit der Lastumschalterkonstruktion, ohne dabei auf eine aufwändige Hilfskonstruktion, wie beispielsweise in der WO96/30922 beschrieben, zurückgreifen zu müssen.

Zudem bietet die erfindungsgemäße Lösung den weiteren technischen Vorteil der elektrischen Symmetrie der Schaltung. Damit werden sämtliche Schaltmittel, seien es verwendete Vakuumschaltröhren, Halbleiterbauelemente, mechanische Kontakte oder auch eingeschleifte Widerstände, beim Umschalten unter Last mit den gleichen Schaltstrecken belastet. Dies bietet den Vorteil einer besonders schonenden Beanspruchung aller verwendeten Schaltmittel. Da sich die Funktionen der Vakuumröhren oder der alternativ verwendeten Halbleiterbauelemente beim Schalten von der Wicklungsanzapfung n auf die Wicklungsanzapfung n+1 und beim Schalten von der Wicklungsanzapfung n+1 auf die Wicklungsanzapfung n abwechseln, weisen die verwendeten Vakuumschaltröhren oder die alternativ verwendeten Halbleiterbauelemente weiterhin einen wartungstechnisch vorteilhaften symmetrischen Verschleiß auf.

Die Erfindung wird nachfolgend an Hand von Ausführungsbeispielen näher erläutert.
Es zeigen
- Figur 1: einen erfindungsgemäßen Laststufenschalter in schematischer Darstellung. Gezeigt ist hier die Grundstellung, in der die Wicklungsanzapfung n beschaltet ist
- Figur 2 bis 7: Zeigen die einzelnen Schaltschritte der Umschaltsequenz bei einer Lastumschaltung auf eine Wicklungsanzapfung n+1. Figur 7 zeigt dabei den stationären Zustand nach vollzogener Umschaltung.

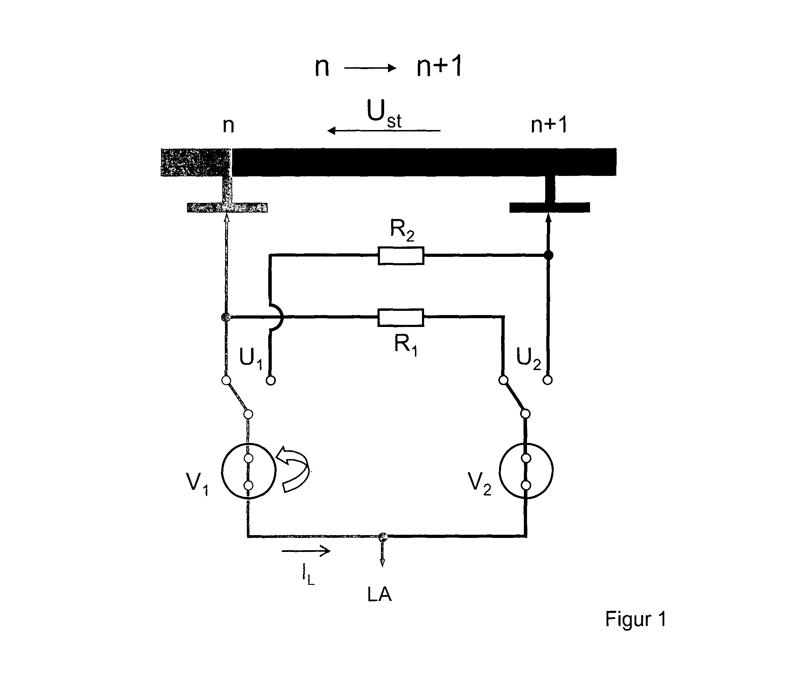

In Figur 1 ist ein Lastumschalter eines erfindungsgemäßen Laststufenschalters im Detail dargestellt. Dabei ist die Erfindung nachfolgend beispielhaft an Hand der Ausführung mit Vakuumschaltröhren erklärt und dargestellt. Der Wähler des Laststufenschalters, der vor der eigentlichen Lastumschaltung die leistungslose Anwahl der neuen Wicklungsanzapfung, hier n+1, auf die umgeschaltet werden soll, vornimmt, ist nicht gezeigt. Der Lastumschalter hat, wie nach dem Stand der Technik bekannt, zwei Lastzweige, die jeweils mit einer Wicklungsanzapfung n bzw. n+1 elektrisch in Verbindung stehen. Der erfindungsgemäße Laststufenschalter besitzt in jedem Lastzweig einen Hauptstromzweig und einen Hilfsstromzweig.

Der erste Hauptstromzweig stellt eine elektrische Verbindung von der Wicklungsanzapfung n über einen mechanischen Umschalter U1 und einer dazu in Reihe geschalteten Vakuumschaltröhre V1 zur Lastabteilung LA her. In analog symmetrischer Bauweise dazu, stellt der zweite Hauptstromzweig eine elektrische Verbindung von der Wicklungsanzapfung n+1 über einen in Reihe geschalteten mechanischen Umschalter U2 und eine Vakuumschaltröhre V2 ebenfalls zur Lastableitung LA her.

Zwischen der Wicklungsanzapfung n und dem mechanischen Umschalter U1 des ersten Hauptstromzweiges ist ein erster Hilfsstromzweig mit einem eingeschleiften Widerstand R1 abgezweigt, mittels dem eine elektrische Verbindung mit dem mechanischen Umschalter U2 des zweiten Hauptstromzweiges herstellbar ist. In wiederum analoger Bauweise dazu ist zwischen der Wicklungsanzapfung n+1 und dem mechanischen Umschalter U2 des zweiten Hauptstromzweiges ein zweiter Hilfsstromzweig mit einem eingeschleiften Widerstand R2 abgezweigt, mittels dem eine elektrische Verbindung mit dem mechanischen Umschalter U1 des ersten Hauptstromzweiges herstellbar ist. Abhängig von der Stellung der jeweiligen Schaltmittel kann damit der erste Hilfsstromzweig eine elektrisch leitende Verbindung von der Wicklungsanzapfung n über den Widerstand R1 und die dazu in Reihe geschalteten Schaltmittel, nämlich dem mechanischen Umschalter U2 und der Vakuumschaltröhre V2, zur Lastableitung LA herstellen, der zweite Hilfsstromzweig von der Wicklungsanzapfung n+1 über den Widerstand R2 und die in Reihe dazu geschalteten Schaltmittel, nämlich dem mechanischen Umschalter U1 und der Vakuumschaltröhre V1.

In Figur 1 ist der stationäre Betrieb der beschalteten Wicklungsanzapfung n gezeigt, bei der der Laststrom von der Wicklungsanzapfung n über den mechanischen Umschalter U1 und die geschlossene Vakuumröhre V1 direkt zur Lastableitung LA fließt. Da der Strom den Weg des geringsten inneren Leitungswiderstandes wählt, fließt nur ein vernachlässigbar geringer Anteil des Laststromes von der Wicklungsanzapfung n über den abgezweigten ersten Hilfsstromzweig zur Lastableitung LA.

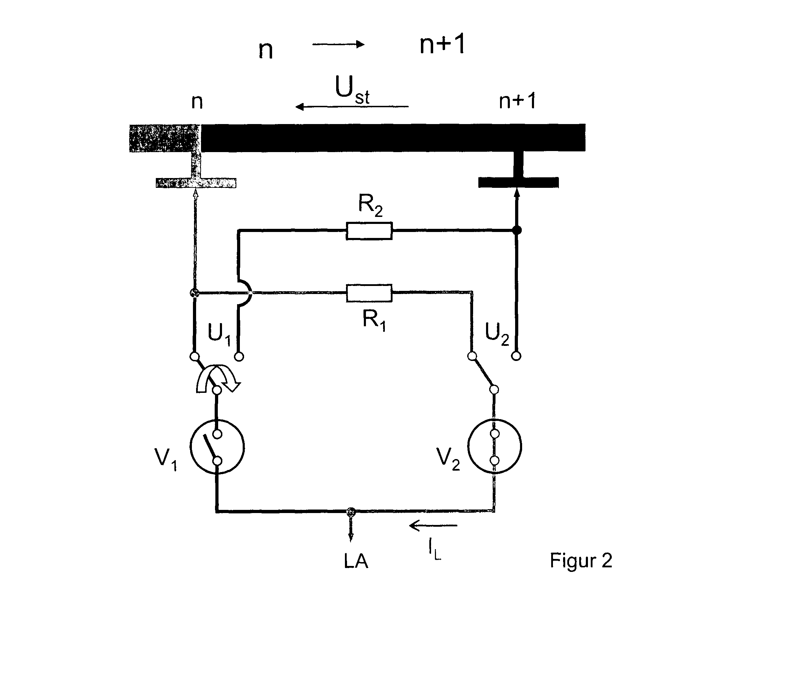

Nachfolgend soll an Hand der weiteren Figuren 2 bis 7 eine vollständige Schaltsequenz des erfindungsgemäßen Laststufenschalters bei der Umschaltung der in Figur 1 gezeigten Grundstellung auf die neue Wicklungsanzapfung n+1 in allen Einzelschritten dargestellt werden.
- Figur 2:: Die Vakuumröhre V1 ist geöffnet; der Laststrom wird von dem ersten Hilfsstromzweig, der den Widerstand R1 beinhaltet, den auf den ersten Hilfsstromzweig geschalteten mechanischen Umschalter U2 und der geschlossenen Vakuumröhre V2 übernommen und zur Lastableitung LA geführt. Zudem schaltet der mechanischen Umschalter U1 lastlos von der Seite n auf den zweiten Hilfsstromzweig der Seite n+1 um.

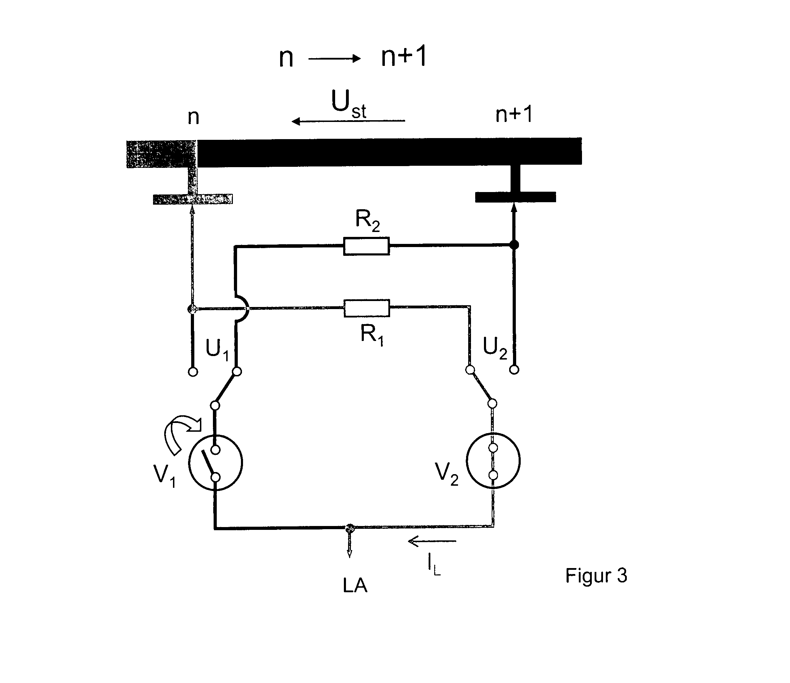

- Figur 3:: Die Vakuumröhre V1 schließt.

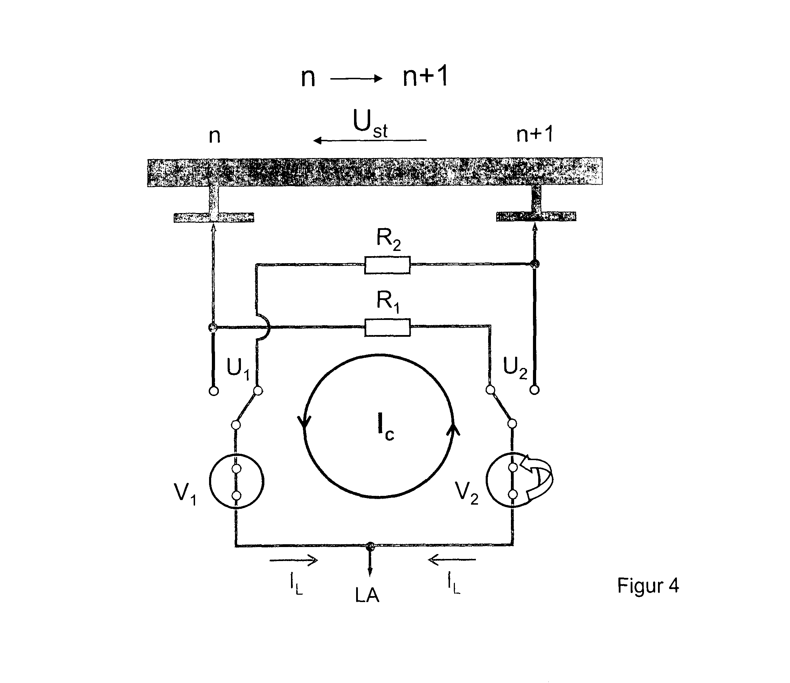

- Figur 4:: Es fließt ein Kreisstrom IC über die beiden Vakuumröhren V1 und V2, die mechanischen Umschalter U1 und U2 und die Widerstände R1 und R2 in jedem der beiden Zweige. Gleichzeitig beginnt sich die Vakuumröhre V2 zu öffnen.

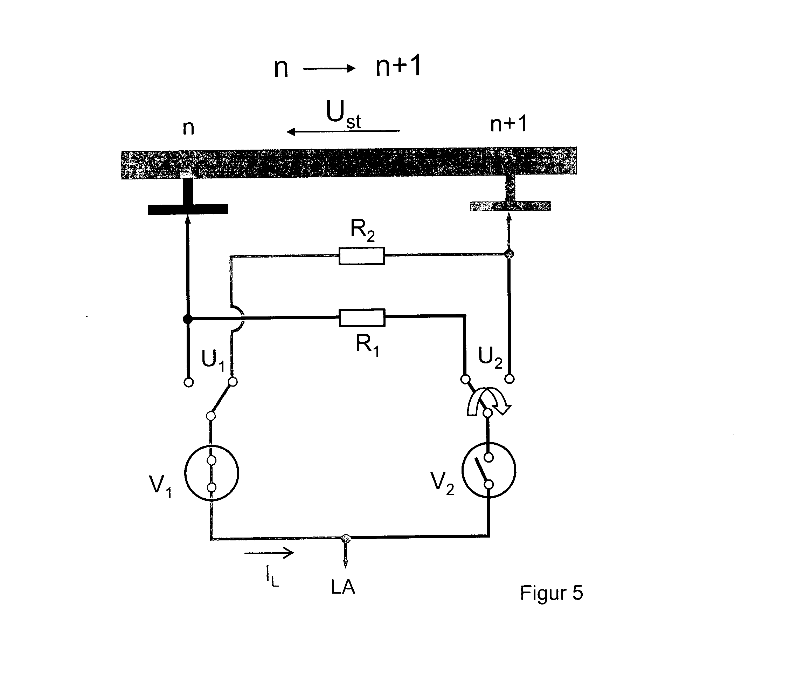

- Figur 5:: Der Laststrom ist jetzt vollständig auf den anderen Zweig kommutiert und wird ausschließlich über die Reihenschaltung des Widerstandes R2, des mechanischen Umschalters U1 und der Vakuumröhre V1 geführt. Weiterhin schaltet der mechanische Umschalter U2 lastlos von der Seite n auf die Seite n+1 um.

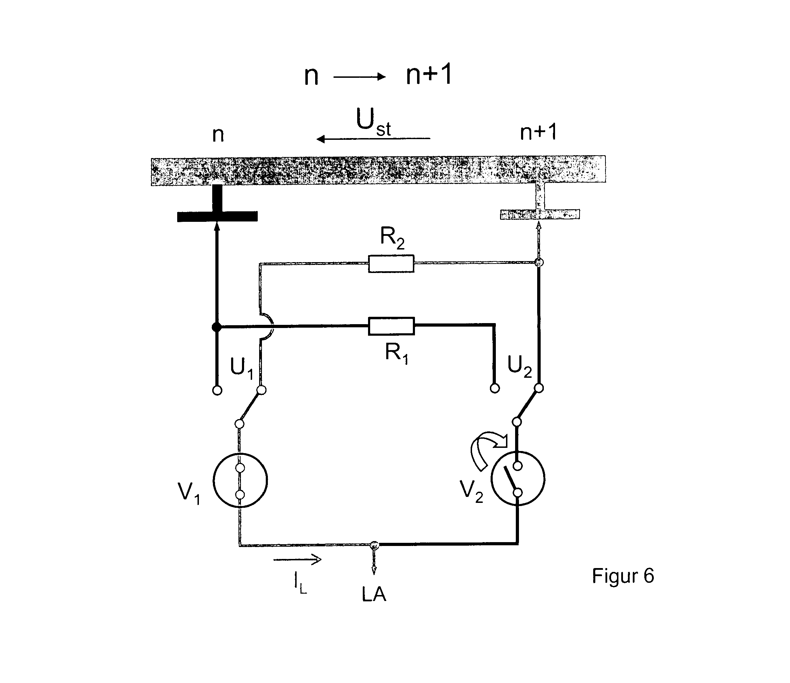

- Figur 6:: Die Vakuumröhre V2 schließt.

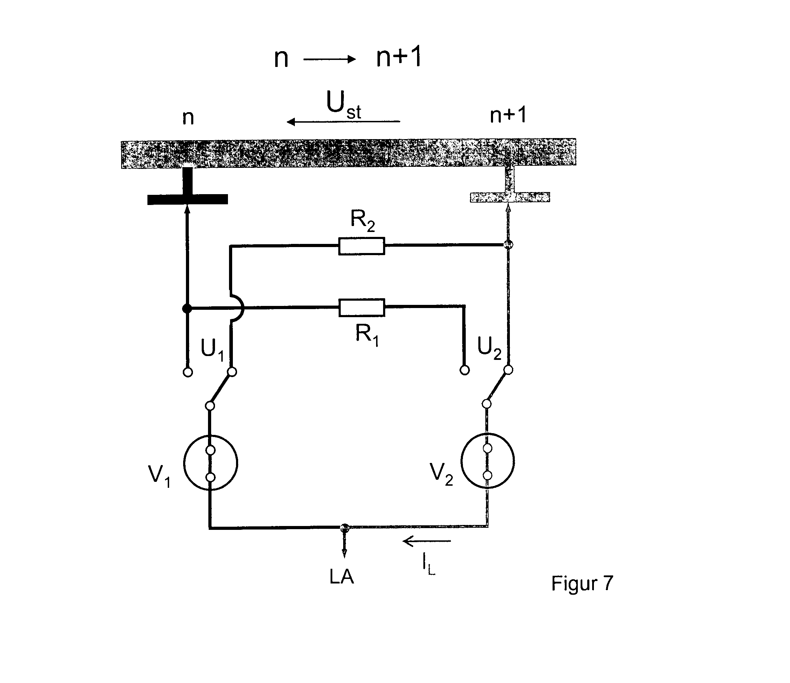

- Figur 7:: Schließlich übernimmt der Hauptstromzweig der Wicklungsanzapfung n+1, bestehend aus der Reihenschaltung des mechanischen Umschalters U2 und des Vakuumröhre V2, den Laststrom; die Umschaltung auf die neue Wicklungsanzapfung n+1 ist abgeschlossen.

Da die Schaltung erfindungsgemäß elektrisch und mechanisch symmetrisch ist, erfolgt die Umschaltung von der Wicklungsanzapfung n+1 auf die Wicklungsanzapfung n in analog umgekehrter Reihenfolge.

## Patentansprüche

1. Laststufenschalter zur unterbrechungslosen Umschaltung zwischen Wicklungsanzapfungen eines Stufentransformators,
aufweisend einen Wähler zur leistungslosen Vorwahl der neuen Wicklungsanzapfung, auf die umgeschaltet werden soll, und einen Lastumschalter zur eigentlichen unterbrechungslosen Lastumschaltung,
wobei der Lastumschalter zwei Hauptstromzweige und zwei Hilfsstromzweige besitzt, die mit einer Lastableitung verbindbar sind,
wobei die erste Wicklungsanzapfung (n) des ersten Hauptstromzweiges über eine Reihenschaltung, bestehend aus einem mechanischen Umschalter (U1) und einer Vakuumschaltröhre (V1), mit der Lastableitung (LA) verbindbar ist,
wobei die zweite Wicklungsanzapfung (n+1) des zweiten Hauptstromzweiges über eine Reihenschaltung, bestehend aus einem mechanischen Umschalter (U2) und einer Vakuumschaltröhre (V2), mit der Lastableitung (LA) verbindbar ist,
wobei zwischen der ersten Wicklungsanzapfung (n) und dem mechanischen Umschalter (U1) des ersten Hauptstromzweiges der erster Hilfsstromzweig mit einem eingeschleiften Widerstand R1 abgezweigt ist, mittels dem eine elektrische Verbindung mit dem mechanischen Umschalter (U2) des zweiten Hauptstromzweiges herstellbar ist,
und wobei zwischen der zweiten Wicklungsanzapfung (n+1) und dem mechanischen Umschalter (U2) des zweiten Hauptstromzweiges der zweite Hilfsstromzweig mit einem eingeschleiften Widerstand R2 abgezweigt ist, mittels dem eine elektrische Verbindung mit dem mechanischen Umschalter (U1) des ersten Hauptstromzweiges herstellbar ist
**dadurch gekennzeichnet,**
dass der erste mechanische Umschalter (U1) zur direkten Umschaltung zwischen dem ersten Hauptstromzweig und dem zweiten Hilfsstromzweig ausgebildet ist,
und dass der zweite mechanische Umschalter (U2) zur direkten Umschaltung zwischen dem zweiten Hauptstromzweig und dem ersten Hilfsstromzweig ausgebildet ist.

2. Laststufenschalter zur unterbrechungslosen Umschaltung zwischen Wicklungsanzapfungen eines Stufentransformators,
aufweisend einen Wähler zur leistungslosen Vorwahl der neuen Wicklungsanzapfung, auf die umgeschaltet werden soll, und einen Lastumschalter zur eigentlichen unterbrechungslosen Lastumschaltung,
wobei der Lastumschalter zwei Hauptstromzweige und zwei Hilfsstromzweige besitzt, die mit einer Lastableitung verbindbar sind,
wobei die erste Wicklungsanzapfung (n) des ersten Hauptstromzweiges über eine Reihenschaltung, bestehend aus einem mechanischen Umschalter (U1) und einem ersten Halbleiterbauelement mit der Lastableitung (LA) verbindbar ist,
wobei die zweite Wicklungsanzapfung (n+1) des zweiten Hauptstromzweiges über eine Reihenschaltung, bestehend aus einem mechanischen Umschalter (U2) und einem zweiten Halbleiterbauelement mit der Lastableitung (LA) verbindbar ist,
wobei zwischen der ersten Wicklungsanzapfung (n) und dem mechanischen Umschalter (U1) des ersten Hauptstromzweiges der erster Hilfsstromzweig mit einem eingeschleiften Widerstand R1 abgezweigt ist, mittels dem eine elektrische Verbindung mit dem mechanischen Umschalter (U2) des zweiten Hauptstromzweiges herstellbar ist,
und wobei zwischen der zweiten Wicklungsanzapfung (n+1) und dem mechanischen Umschalter (U2) des zweiten Hauptstromzweiges der zweite Hilfsstromzweig mit einem eingeschleiften Widerstand R2 abgezweigt ist, mittels dem eine elektrische Verbindung mit dem mechanischen Umschalter (U1) des ersten Hauptstromzweiges herstellbar ist.
**dadurch gekennzeichnet,**
dass der erste mechanische Umschalter (U1) zur direkten Umschaltung zwischen dem ersten Hauptstromzweig und dem zweiten Hilfsstromzweig ausgebildet ist,
und dass der zweite mechanische Umschalter (U2) zur direkten Umschaltung zwischen dem zweiten Hauptstromzweig und dem ersten Hilfsstromzweig ausgebildet ist.

## Claims

1. On-load tap changer for uninterrupted switching over between winding taps of a tapped transformer, comprising
a selector for power-free pre-selection of the new winding tap, which is to be switched over to, and a load changeover switch for the actual uninterrupted load changeover,
wherein the load changeover switch has two main current branches and two auxiliary current branches, which are connectible with a load shunt,
wherein the first winding tap (n) of the first main current branch is connectible with the load shunt (LA) by way of a series connection consisting of a mechanical changeover switch (U1) and a vacuum switching tube (V1),
wherein the second winding tap (n+1) of the second main current branch is connectible with the load shunt (LA) by way of a series connection consisting of a mechanical changeover switch (U2) and a vacuum switching tube (V2),
wherein the first auxiliary current branch is branched-off between the first winding tap (n) and the mechanical changeover switch (U1) of the first main current branch and has a looped-in resistance (R1) by means of which an electrical connection with the mechanical changeover switch (U2) of the second main current branch is producible and
wherein the second auxiliary current branch is branched-off between the second winding tap (n+1) and the mechanical changeover switch (U1) of the second main current branch and has a looped-in resistance (R2) by means of which an electrical connection with the mechanical changeover switch (U1) of the first main current branch is producible, **characterised in that**
the first mechanical changeover switch (U1) is constructed for direct switching over between the first main current branch and the second auxiliary current branch and
the second mechanical changeover switch (U2) is constructed for direct switching over between the second main current branch and the first auxiliary current branch.

2. On-load tap changer for uninterrupted switching over between winding taps of a tapped transformer, comprising
a selector for power-free pre-selection of the new winding tap, which is to be switched over to, and a load changeover switch for the actual uninterrupted load changeover,
wherein the load changeover switch has two main current branches and two auxiliary current branches, which are connectible with a load shunt,
wherein the first winding tap (n) of the first main current branch is connectible with the load shunt (LA) by way of a series connection consisting of a mechanical changeover switch (U1) and a first semiconductor component,
wherein the second winding tap (n+1) of the second main current branch is connectible with the load shunt (LA) by way of a series connection consisting of a mechanical changeover switch (U2) and a second semiconductor component,
wherein the first auxiliary current branch is branched-off between the first winding tap (n) and the mechanical changeover switch (U1) of the first main current branch and has a looped-in resistance (R1) by means of which an electrical connection with the mechanical changeover switch (U2) of the second main current branch is producible and
wherein the second auxiliary current branch is branched-off between the second winding tap (n+1) and the mechanical changeover switch (U1) of the second main current branch and has a looped-in resistance (R2) by means of which an electrical connection with the mechanical changeover switch (U1) of the first main current branch is producible, **characterised in that**
the first mechanical changeover switch (U1) is constructed for direct switching over between the first main current branch and the second auxiliary current branch and
the second mechanical changeover switch (U2) is constructed for direct switching over between the second main current branch and the first auxiliary current branch.

## Revendications

1. Commutateur à gradins en charge pour permettre d'effectuer une commutation sans interruption entre des prises d'enroulement d'un transformateur à gradins,
comportant un sélecteur pour permettre d'effectuer une présélection hors tension de la nouvelle prise d'enroulement sur laquelle la commutation doit être effectuée, et un commutateur de réglage en charge pour permettre d'effectuer la commutation en charge sans interruption proprement dite, dans lequel
le commutateur de réglage en charge comprend deux branches de courant principales et deux branches de courant auxiliaires qui peuvent être reliées à une sortie de charge,
la première prise d'enroulement (n) de la première branche de courant principale peut être reliée à la sortie de charge (LA) par un montage en série constitué d'un commutateur mécanique (U1) et d'un tube de commutation à vide (V1),
la seconde prise d'enroulement (n+1) de la seconde branche de courant principale peut être reliée à la sortie de charge (LA) par un montage en série constitué d'un commutateur mécanique (U2) et d'un tube de commutation à vide (V2),
entre la première prise d'enroulement (n) et le commutateur mécanique (U1) de la première branche de courant principale est branchée en dérivation, la première branche de courant auxiliaire comprenant une résistance bouclée R1 au moyen de laquelle peut être obtenue une liaison électrique avec le commutateur mécanique (U2) de la seconde branche de courant principale, et
entre la seconde prise d'enroulement (n+1) et le commutateur mécanique (U2) de la seconde branche de courant principale est branchée en dérivation, la seconde branche de courant auxiliaire comprenant une résistance bouclée R2 au moyen de laquelle peut être obtenue une liaison électrique avec le commutateur mécanique (U1) de la première branche de courant principal,
**caractérisée en ce que**
le premier commutateur mécanique (U1) est réalisé pour permettre une commutation directe entre la première branche de courant principale et la seconde branche de courant auxiliaire, et
le second commutateur mécanique (U2) est réalisé pour permettre une commutation directe entre la seconde branche de courant principale et la première branche de courant auxiliaire.

2. Commutateur à gradins en charge pour permettre d'effectuer une commutation sans interruption entre des prises d'enroulement d'un transformateur à gradins,
comprenant un sélecteur pour permettre d'effectuer une présélection hors tension de la nouvelle prise d'enroulement sur laquelle la commutation doit être effectuée et un commutateur de réglage en charge pour permettre d'effectuer la commutation en charge sans interruption proprement dite, dans lequel :
le commutateur de réglage en charge comprend deux branches de courant principales et deux branches de courant auxiliaires qui peuvent être reliées à une sortie de charge,
la première prise d'enroulement (n) de la première branche de courant principale peut être reliée à la sortie de charge (LA) par un montage en série constitué d'un commutateur mécanique (U1), d'un premier composant semi-conducteur,
la seconde prise d'enroulement (n+1) de la seconde branche de courant principale peut être reliée à la sortie de charge (LA) par un montage en série constitué d'un commutateur mécanique (U2) et d'un second composant semi-conducteur,
entre la première prise d'enroulement (n) et le commutateur mécanique (U1) de la première branche de courant principale est branchée en dérivation, la seconde branche de courant auxiliaire comprenant une résistance bouclée R1 au moyen de laquelle peut être obtenue une liaison électrique avec le commutateur mécanique (U2) de la seconde branche de courant principale, et
entre la seconde prise d'enroulement (n+1) et le commutateur mécanique (U2) de la seconde branche de courant principale est branchée en dérivation, la seconde branche de courant auxiliaire comprenant une résistance bouclée R2 au moyen de laquelle peut être obtenue une liaison électrique avec le commutateur mécanique (U1) de la première branche de courant principale,
**caractérisée en ce que**
le premier commutateur mécanique (U1) est réalisé pour permettre une commutation directe entre la première branche de courant principale et la seconde branche de courant auxiliaire, et
le seconde commutateur mécanique (U2) est réalisé pour permettre une commutation directe entre la seconde branche de courant principale et la première branche de courant auxiliaire.
